# EUROPÄISCHE PATENTANMELDUNG

(11) **EP 3 839 429 A1**
(43) Veröffentlichungstag der Anmeldung: **23.06.2021**
(21) Anmeldenummer: 19216530.6
(22) Anmeldetag: 16.12.2019
(51) Int. Cl.: G01C 15/00

(54) **VERFAHREN ZUM BESTIMMEN EINES ABSTANDES ZWISCHEN EINEM LASERSYSTEM UND EINER PROJEKTIONSFLÄCHE**

(71) Anmelder: Hilti Aktiengesellschaft, 9494 Schaan (LI)
(72) Erfinder: Winter, Andreas, 6800 Feldkirch (AT)
(74) Vertreter: Hilti Aktiengesellschaft Corporate Intellectual Property

(57) **Zusammenfassung**

Verfahren zum Bestimmen eines Abstandes (D) zwischen einem Lasersystem (11) und einer Projektionsfläche (14), bei dem ein Retroreflektor (13), der einen reflektierenden Abschnitt mit einem Reflexionsvermögen aufweist, auf der Projektionsfläche (14) angeordnet wird und mithilfe eines Detektors (12) ein am Retroreflektor (13) reflektierter Laserstrahl (39) erfasst wird.

## Beschreibung

### Technisches Gebiet

Die vorliegende Erfindung betrifft ein Verfahren zum Bestimmen eines Abstandes zwischen einem Lasersystem und einer Projektionsfläche gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand des Lasersystem zur Projektionsfläche abhängig.

### Darstellung der Erfindung

Die Aufgabe der vorliegenden Erfindung besteht in der Entwicklung eines Verfahrens zum Bestimmen eines Abstandes zwischen einem Lasersystem und einer Projektionsfläche. Dabei soll der apparative Aufwand möglichst gering sein, wobei insbesondere Anpassungen am Strahlengang des Lasersystems vermieden werden sollen.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zum Bestimmen eines Abstandes zwischen einem Lasersystem und einer Projektionsfläche weist erfindungsgemäß folgende Schritte auf:
▪ Anordnen eines Retroreflektors mit einem Reflexionsvermögen auf der Projektionsfläche, wobei ein Laserstrahl des Lasersystems vom Retroreflektor überwiegend reflektiert wird,
▪ Aussenden eines Laserstrahls mit einer Strahlleistung auf den Retroreflektor,
▪ Bestimmen einer Intensität eines am Retroreflektor reflektierten Laserstrahls mittels eines Detektors,
▪ Vergleichen der Intensität des reflektierten Laserstrahls mit gespeicherten Werten und
▪ Bestimmen des Abstandes, der der Intensität zugeordnet ist.

Beim erfindungsgemäßen Verfahren zum Bestimmen eines Abstandes zwischen einem Lasersystem und einer Projektionsfläche wird ein Retroreflektor verwendet, der auf der Projektionsfläche angeordnet wird. Der Retroreflektor reflektiert einen Laserstrahl des Lasersystems überwiegend und weist ein bekanntes Reflexionsvermögen auf. Das Lasersystem sendet einen Laserstrahl mit einer bekannten Strahlleistung aus, der auf den Retroreflektor auftrifft. Der Laserstrahl wird am Retroreflektor reflektiert und trifft auf einen Detektor. Der Detektor bestimmt eine Intensität des reflektierten Laserstrahls am Ort des Detektors und übermittelt diese an eine Kontrolleinrichtung des Lasersystems.

Bei der Ausbreitung eines Laserstrahls erfolgt eine Dämpfung der Intensität, die von der Entfernung abhängig ist. Diese entfernungsabhängige Dämpfung des Laserstrahls wird im Rahmen des erfindungsgemäßen Verfahrens genutzt, um den Abstand zwischen dem Lasersystem und der Projektionsfläche zu bestimmen. Die Kontrolleinrichtung des Lasersystems kann aus einer Intensität des Laserstrahls und der gemessenen Intensität des reflektierten Laserstrahls am Ort des Detektors den Abstand zwischen dem Lasersystem und dem Retroreflektor bzw. der Projektionsfläche bestimmen. Die Intensität des Laserstrahls kann aus der Leistung der Laserstrahlquelle und dem Reflexionsvermögen des Retroreflektors bestimmt werden.

Das erfindungsgemäße Verfahren weist den Vorteil auf, dass der Abstand zwischen dem Lasersystem und der Projektionsfläche ohne Änderungen bzw. mit geringeren Änderungen am Aufbau des Lasersystems bestimmt werden kann. Der Retroreflektor ist außerhalb des Lasersystems angeordnet. Um die Intensität eines am Retroreflektor reflektierten Laserstrahls messen zu können, wird ein Detektor benötigt.

Bevorzugt werden in einer Kontrolleinrichtung des Lasersystems oder in einem mit der Kontrolleinrichtung verbundenen Speicherelement Werte von Intensitäten und Abständen, die einander zugeordnet sind, gespeichert. Die Kontrolleinrichtung kann aus einer Intensität des Laserstrahls und der gemessenen Intensität des reflektierten Laserstrahls am Ort des Detektors den Abstand zwischen dem Lasersystem und dem Retroreflektor bzw. der Projektionsfläche bestimmen.

Die Erfindung betrifft weiterhin ein Verfahren zum Anpassen einer Brennweite einer Fokussieroptik eines Lasersystems abhängig von einem Abstand zwischen dem Lasersystem und einer Projektionsfläche, wobei der Abstand mittels des Verfahrens nach einem der Ansprüche 1 bis 2 bestimmt wurde. Als Fokussieroptik ist ein optisches Element definiert, das eine endliche Brennweite aufweist und einen auftreffenden Laserstrahl fokussiert. Ein fokussierter Laserstrahl weist im Bereich der Fokuslage einen kleineren Strahldurchmesser auf als ein nicht-fokussierter Laserstrahl.

Wenn der Abstand zwischen dem Lasersystem und der Projektionsfläche mittels des erfindungsgemäßen Verfahrens bestimmt wurde, kann die Brennweite einer Fokussieroptik, die im Strahlengang des Lasersystems angeordnet ist, an den Abstand angepasst werden. Dies hat den Vorteil, dass auf der Projektionsfläche eine scharf begrenzte linienförmige Lasermarkierung erzeugt werden kann, die eine hohe Qualität aufweist. Je schmaler die linienförmige Lasermarkierung auf der Projektionsfläche ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW bei Lasersystemen der Laserklasse 2 oder 2M auf eine kleinere Fläche verteilt wird und eine höhere Leistungsdichte resultiert.

Die Erfindung betrifft weiterhin eine Vorrichtung zur Ausführung eines Verfahrens zum Bestimmen eines Abstandes zwischen einem Lasersystem und einer Projektionsfläche nach einem der Ansprüche 1 bis 2, aufweisend ein Lasersystem, einen Detektor und einen Retroreflektor. Die Vorrichtung zur Ausführung des erfindungsgemäßen Verfahrens zum Bestimmen des Abstandes umfasst ein Lasersystem, das als Rotationslaser oder Linienlaser ausgebildet ist, einen Detektor und einen Retroreflektor. Der Retroreflektor befindet sich außerhalb des Lasersystems auf der Projektionsfläche. Um die Intensität eines am Retroreflektor reflektierten Laserstrahls messen zu können, wird der Detektor benötigt.

Bevorzugt weist der Retroreflektor ein Reflexionsvermögen aufweist und ist ausgebildet, einen Laserstrahl des Lasersystems überwiegend zu reflektieren. Bei der Ausbreitung eines Laserstrahls erfolgt eine Dämpfung der Intensität, die von der Entfernung abhängig ist. Diese entfernungsabhängige Dämpfung wird genutzt, um den Abstand zwischen dem Lasersystem und der Projektionsfläche zu bestimmen. Eine Kontrolleinrichtung kann aus einer Intensität des Laserstrahls und der gemessenen Intensität des reflektierten Laserstrahls am Ort des Detektors den Abstand zwischen dem Rotationslaser und der Projektionsfläche bestimmen. Die Intensität des Laserstrahls kann aus der Leistung der Laserstrahlquelle und dem Reflexionsvermögen des Retroreflektors bestimmt werden.

Bevorzugt ist der Detektor ausgebildet, eine Intensität eines am Retroreflektor reflektierten Laserstrahls zu bestimmen. Der Abstand zwischen dem Lasersystem und dem Retroreflektor kann aus der Intensität eines am Retroreflektor reflektierten Laserstrahls bestimmt werden. Bei der Ausbreitung eines Laserstrahls erfolgt eine Dämpfung der Intensität, die von der Entfernung abhängig ist. Diese entfernungsabhängige Dämpfung wird genutzt, um den Abstand zwischen dem Lasersystem und der Projektionsfläche zu bestimmen. Dazu wird die Intensität eines am Retroreflektor reflektierten Laserstrahls mithilfe des Detektors bestimmt.

In einer ersten Variante weist das Lasersystem eine Strahlteilungsoptik auf, die ausgebildet ist, einen am Retroreflektor reflektierten Laserstrahl auf den Detektor umzulenken. Die Strahlteilungsoptik dient dazu, den Laserstrahl und den am Retroreflektor reflektierten Laserstrahl voneinander zu trennen und den reflektierten Laserstrahl auf den Detektor umzulenken.

In einer zweiten Variante sind der Detektor und die Laserstrahlquelle in eine Laserdiode integriert. Die Verwendung einer speziellen Laserdiode, die den Detektor und die Laserstrahlquelle umfasst, hat den Vorteil, dass am Lasersystem keine Anpassungen erforderlich sind. Diese spezielle Laserdiode ist verfügbar und wird in bekannten Lasersystemen beispielsweise eingesetzt, um sicherzustellen, dass die maximal zulässige Laserleistung einer Laserklasse nicht überschritten wird.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

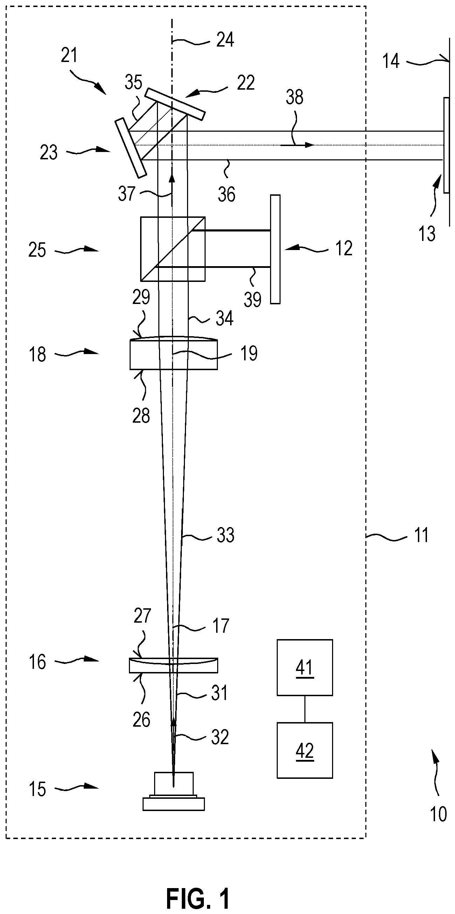

- FIG. 1: eine erste Ausführungsform einer erfindungsgemäßen Vorrichtung, die einen Rotationslaser, einen Detektor und einen Retroreflektor aufweist und die zur Ausführung eines Verfahrens zum Bestimmen eines Abstandes zwischen dem Rotationslaser und einer Projektionsfläche ausgebildet ist, in einer schematischen Darstellung; und

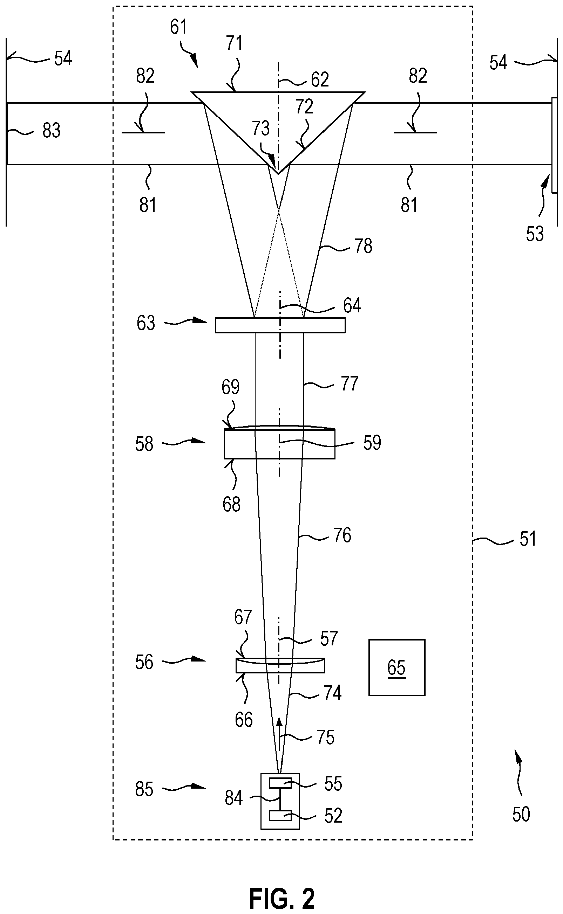

- FIG. 2: eine zweite Ausführungsform einer erfindungsgemäßen Vorrichtung, die einen Linienlaser, einen Detektor und einen Retroreflektor aufweist und die zur Ausführung eines Verfahrens zum Bestimmen eines Abstandes zwischen dem Linienlaser und einer Projektionsfläche ausgebildet ist, in einer schematischen Darstellung.

**FIG. 1** zeigt eine erste Ausführungsform einer erfindungsgemäßen Vorrichtung **10**, die ein als Rotationslaser ausgebildetes Lasersystem **11**, einen Detektor **12** und einen Retroreflektor **13** aufweist, in einer schematischen Darstellung. Die Vorrichtung 10 ist zur Ausführung eines Verfahrens zum Bestimmen eines Abstandes D zwischen dem Lasersystem 11 und einer Projektionsfläche **14** ausgebildet.

Der Rotationslaser 11 umfasst eine Laserstrahlquelle **15**, eine als Fokussieroptik ausgebildete erste Strahlformungsoptik **16** mit einer ersten optischen Achse **17**, eine als Kollimationsoptik ausgebildete zweite Strahlformungsoptik **18** mit einer zweiten optischen Achse **19** und eine Strahlumlenkoptik **21** mit einer ersten Spiegelfläche **22** und einer zweiten Spiegelfläche **23.** Die Strahlumlenkoptik 21 ist um eine Rotationsachse **24** verstellbar ausgebildet. Um den Abstand D zwischen dem Rotationslaser 11 und der Projektionsfläche 14 zu bestimmen, weist der Rotationslaser 11 zusätzlich eine Strahlteilungsoptik **25** auf.

Die optischen Komponenten des Rotationslasers 11 sind in der Reihenfolge Laserstrahlquelle 15, Fokussieroptik 16, Kollimationsoptik 18 und Strahlumlenkoptik 21 angeordnet. Dabei sind die erste optische Achse 17, die zweite optische Achse 19 und die Rotationsachse 24 koaxial zueinander angeordnet. Die Strahlteilungsoptik 25 ist im Ausführungsbeispiel zwischen der Kollimationsoptik 18 und der Strahlumlenkoptik 21 angeordnet; alternativ kann die Strahlteilungsoptik 25 zwischen der Laserstrahlquelle 15 und der Fokussieroptik 16 oder zwischen der Fokussieroptik 16 und der Kollimationsoptik 18 angeordnet sein.

Die Laserstrahlquelle 15 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren optischen Komponenten des Rotationslasers 11 sind an die Wellenlänge der Laserstrahlquelle 15 angepasst. Die Laserstrahlquelle 15 weist eine Strahlleistung **P** und eine Strahlleistung pro Fläche, die auch als Intensität I bezeichnet wird, auf.

Die Fokussieroptik 16 ist als Strahlformungsoptik mit einer planen Eintrittsfläche **26** und einer gekrümmten Austrittsfläche **27** ausgebildet und weist eine verstellbare Brennweite **f** auf; die erste optische Achse 17 verläuft durch den Krümmungsmittelpunkt der Austrittsfläche 27 und steht senkrecht auf der Eintrittsfläche 26. Die Kollimationsoptik 18 ist als Strahlformungsoptik mit einer planen Eintrittsfläche **28** und einer gekrümmten Austrittsfläche **29** ausgebildet; die zweite optische Achse 19 verläuft durch den Krümmungsmittelpunkt der Austrittsfläche 29 und steht senkrecht auf der Eintrittsfläche 28.

Die Brennweite f der Fokussieroptik 16 wird insbesondere abhängig vom Abstand D zwischen dem Lasersystem 11 und der Projektionsfläche 14 eingestellt. Der Abstand D wird mittels des erfindungsgemäßen Verfahrens zum Bestimmen des Abstandes D bestimmt und an eine Kontrolleinrichtung des Lasersystems 11 übermittelt. Dies hat den Vorteil, dass auf der Projektionsfläche 14 eine scharf begrenzte linienförmige Lasermarkierung erzeugt werden kann, die eine hohe Qualität aufweist. Je schmaler die linienförmige Lasermarkierung auf der Projektionsfläche 14 ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW bei Lasersystemen der Laserklasse 2 oder 2M auf eine kleinere Fläche verteilt wird und eine höhere Leistungsdichte resultiert.

Die Laserstrahlquelle 15 erzeugt einen divergenten Laserstrahl **31**, der entlang einer Ausbreitungsrichtung **32** ausgesandt wird und auf die Fokussieroptik 16 gerichtet ist. Der divergente Laserstrahl 31 trifft auf die Fokussieroptik 16, die einen fokussierten Laserstrahl **33** erzeugt. Der fokussierte Laserstrahl 33 trifft auf die Kollimationsoptik 18, die den fokussierten Laserstrahl 33 in einen kollimierten Laserstrahl **34** umformt. Der kollimierte Laserstrahl 34 passiert die Strahlteilungsoptik 25 ungehindert und trifft auf die Strahlumlenkoptik 21. An der ersten Spiegelfläche 22 erfolgt eine erste Umlenkung des kollimierten Laserstrahls 34 und an der zweiten Spiegelfläche 23 erfolgt eine zweite Umlenkung des kollimierten Laserstrahls 34.

Der an der ersten Spiegelfläche 21 umgelenkte Laserstrahl wird als einfach umgelenkter Laserstrahl **35** und der an der zweiten Spiegelfläche 22 umgelenkte Laserstrahl als zweifach umgelenkter Laserstrahl **36** bezeichnet. Die erste und zweite Spiegelfläche 21, 22 sind so zueinander ausgerichtet, dass eine Ausbreitungsrichtung **37** des in die Strahlumlenkoptik 21 eintretenden kollimierten Laserstrahls 34 senkrecht zu einer Ausbreitungsrichtung **38** des aus der Strahlumlenkoptik 21 austretenden zweifach umgelenkten Laserstrahls 36 angeordnet ist.

Der zweifach umgelenkte Laserstrahl 36 verlässt den Rotationslaser 21 und trifft auf den Retroreflektor 13, der auf der Projektionsfläche 14 angeordnet ist. Der Laserstrahl 36 rotiert um die Rotationsachse 24 und kann vom Retroreflektor 13 reflektiert werden. Ein vom Retroreflektor 13 reflektierter Laserstrahl **39** trifft auf die zweite Spiegelfläche 23, an der eine erste Umlenkung des reflektierten Laserstrahls 39 erfolgt, auf die erste Spiegelfläche 22, an der eine zweite Umlenkung des reflektierten Laserstrahls 39 erfolgt, auf die Strahlteilungsoptik 25, an der eine dritte Umlenkung des reflektierten Laserstrahls 39 erfolgt, und auf den Detektor 12, der eine Intensität I_{D} des reflektierten Laserstrahls 39 misst.

Die Steuerung des Rotationslasers 11 erfolgt mittels einer Kontrolleinrichtung **41**. Der Detektor 12 ist mit der Kontrolleinrichtung 41 verbunden, die die Intensität I_{D} des reflektierten Laserstrahls 39 mit gespeicherten Werten vergleicht. Bei der Ausbreitung eines Laserstrahls erfolgt eine Dämpfung der Intensität I, die von der Entfernung abhängig ist. Diese entfernungsabhängige Dämpfung kann genutzt werden, um den Abstand D zwischen dem Lasersystem 11 und der Projektionsfläche 14 zu bestimmen. Die Kontrolleinrichtung 41 des Rotationslasers 11 kann aus einer Intensität des Laserstrahls und der gemessenen Intensität I_{D} des reflektierten Laserstrahls 39 am Ort des Detektors 12 den Abstand D zwischen dem Rotationslaser 11 und der Projektionsfläche 14 bestimmen. Die Intensität des Laserstrahls kann aus der Leistung P der Laserstrahlquelle 15 und dem Reflexionsvermögen R des Retroreflektors 13 bestimmt werden.

Um den Abstand D zwischen dem Lasersystem 11 und der Projektionsfläche 14 bestimmen zu können, weist die Kontrolleinrichtung 41 Werte von Intensitäten und Abständen auf, die einander zugeordnet sind. Wenn die Intensität des Laserstrahls und die Intensität I_{D} des reflektierten Laserstrahls 39 am Ort des Detektors 12 bekannt sind, kann die Kontrolleinrichtung 41 den zugeordneten Abstand D bestimmen. Die Werte von Intensitäten und Abständen, die einander zugeordnet sind, können in der Kontrolleinrichtung 41 oder in einem mit der Kontrolleinrichtung 41 verbundenen Speicherelement **42** gespeichert werden.

**FIG. 2** zeigt eine zweite Ausführungsform einer erfindungsgemäßen Vorrichtung **50**, die ein als Linienlaser ausgebildetes Lasersystem **51**, einen Detektor **52** und einen Retroreflektor **53** aufweist, in einer schematischen Darstellung. Die Vorrichtung 50 ist zur Ausführung eines Verfahrens zum Bestimmen eines Abstandes **D** zwischen dem Lasersystem 51 und einer Projektionsfläche **54** ausgebildet.

Der Linienlaser 51 umfasst eine Laserstrahlquelle **55**, eine als Fokussieroptik ausgebildete erste Strahlformungsoptik **56** mit einer ersten optischen Achse **57**, eine als Kollimationsoptik ausgebildete zweite Strahlformungsoptik **58** mit einer zweiten optischen Achse **59** und eine als Kegelspiegel ausgebildete Strahlumlenkoptik **61** mit einer Kegelachse **62.** Zwischen der Kollimationsoptik 58 und dem Kegelspiegel 61 ist eine als Beugungsgitter ausgebildete dritte Strahlformungsoptik **63** mit einer dritten optischen Achse 64 angeordnet. Die Steuerung des Lasersystems 51 erfolgt mittels einer Kontrolleinrichtung **65.**

Die optischen Komponenten des Lasersystems 51 sind in der Reihenfolge Laserstrahlquelle 55, Fokussieroptik 56, Kollimationsoptik 58, Beugungsgitter 51 und Kegelspiegel 61 angeordnet. Dabei sind die erste optische Achse 56 der Fokussieroptik 55, die zweite optische Achse 59 der Kollimationsoptik 58, die dritte optische Achse 64 des Beugungsgitters 63 und die Kegelachse 62 des Kegelspiegels 61 koaxial zueinander angeordnet.

Die Fokussieroptik 55 ist wie die Fokussieroptik 16 der FIG. 1 als Strahlformungsoptik mit einer planen Eintrittsfläche **66** und einer gekrümmten Austrittsfläche **67** ausgebildet und weist eine verstellbare Brennweite **f** auf, wobei die Brennweite f der Fokussieroptik 55 insbesondere abhängig vom Abstand D zwischen dem Lasersystem 51 und der Projektionsfläche 64 eingestellt wird. Die erste optische Achse 56 verläuft durch den Krümmungsmittelpunkt der Austrittsfläche 67 und steht senkrecht auf der Eintrittsfläche 66. Die Kollimationsoptik 58 ist wie die Kollimationsoptik 18 der FIG. 1 als Strahlformungsoptik mit einer planen Eintrittsfläche **68** und einer gekrümmten Austrittsfläche **69** ausgebildet; die zweite optische Achse 59 verläuft durch den Krümmungsmittelpunkt der Austrittsfläche 69 und steht senkrecht auf der Eintrittsfläche 68.

Das Beugungsgitter 63 ist beispielsweise als Beugungsgitter mit konzentrischen Beugungsstrukturen ausgebildet. Die Eigenschaften des Beugungsgitters 63 werden an die Wellenlänge der Laserstrahlquelle 55 angepasst; mittels der Parameter "Gitterform", "Gitterbreite" und "Gitterhöhe" des Beugungsgitters 63 kann der Laserstrahl umgeformt werden. Als dritte optische Achse 64 des Beugungsgitters 63 ist eine Gerade definiert, die durch das Zentrum der konzentrischen Beugungsstrukturen verläuft und senkrecht auf der Oberfläche des Beugungsgitters 63 steht.

Der Kegelspiegel 61 ist als Abschnitt eines geraden Kegels ausgebildet. Ein Kegel ist von einer Grundfläche und einer Mantelfläche begrenzt, wobei die Grundfläche bei einem geraden Kegel senkrecht zur Kegelachse 62 angeordnet ist. Die Oberfläche des Kegelspiegels 61 umfasst eine kreisförmige Grundfläche **71**, eine Mantelfläche **72** und eine Kegelspitze **73**, wobei die Kegelachse 62 senkrecht zur Grundfläche 71 angeordnet ist und durch die Kegelspitze 73 verläuft. Die Mantelfläche 72 ist für die Wellenlänge der Laserstrahlquelle 55 als reflektierende Mantelfläche ausgebildet und ein auf die Mantelfläche 72 auftreffender Laserstrahl wird an der Mantelfläche 72 überwiegend reflektiert.

Die Laserstrahlquelle 55 erzeugt einen divergenten Laserstrahl **74**, der entlang einer Ausbreitungsrichtung **75** ausgesandt wird und auf die Fokussieroptik 56 gerichtet ist. Der Laserstrahl weist bevorzugt eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten linienförmigen Lasermarkierung auf der Projektionsfläche 54. Der divergente Laserstrahl 74 trifft auf die Fokussieroptik 56, die einen fokussierten Laserstrahl **76** erzeugt. Der fokussierte Laserstrahl 76 trifft auf die Kollimationsoptik 58, die den fokussierten Laserstrahl 76 in einen kollimierten Laserstrahl **77** umformt.

Der kollimierte Laserstrahl 77 trifft auf das Beugungsgitter 63, das einen Ringstrahl **78** mit einem Intensitätsminimum in der Strahlmitte erzeugt. Das Beugungsgitter 63 ist optional und dient dazu, die Qualität einer linienförmigen Lasermarkierung auf der Projektionsfläche 54 zu erhöhen. Der Ringstrahl 78 wird an der Mantelfläche 72 des Kegelspiegels 61 umgelenkt und der Kegelspiegel 61 erzeugt einen Laserstrahl **81**, der sich in einer Ausbreitungsebene **82** ausbreitet und auf der Projektionsfläche 54 eine linienförmige Lasermarkierung **83** mit einem Öffnungswinkel von 360° erzeugt.

Der Laserstrahl 81 verlässt den Linienlaser 51 und trifft auf den Retroreflektor 53, der auf der Projektionsfläche 54 angeordnet ist. Der Laserstrahl kann vom Retroreflektor 53 reflektiert werden. Ein vom Retroreflektor 53 reflektierter Laserstrahl **84** trifft auf Kegelspiegel 61 und wird an der Mantelfläche 72 umgelenkt. Der reflektierte Laserstrahl 84 trifft auf den Detektor 52, der eine Intensität I_{D} des reflektierten Laserstrahls 84 misst. Die Ausführung des erfindungsgemäßen Verfahrens zum Bestimmen des Abstandes D zwischen dem Linienlaser 51 und der Projektionsfläche 54 erfolgt analog zum erfindungsgemäßen Verfahren, das mithilfe des Rotationslasers 11, des Detektors 12 und des Retroreflektors 13 der FIG. 1 ausgeführt wird.

Im Ausführungsbeispiel der Vorrichtung 50 der FIG. 2 sind die Laserstrahlquelle 53 und der Detektor 52 in eine Laserdiode **85** integriert. Die Verwendung der Laserdiode 85 hat den Vorteil, dass am Lasersystem 51 keine Anpassungen erforderlich sind. Diese spezielle Laserdiode 85 ist verfügbar und wird in bekannten Lasersystemen beispielsweise eingesetzt, um sicherzustellen, dass die maximal zulässige Laserleistung einer Laserklasse nicht überschritten wird.

## Patentansprüche

1. Verfahren zum Bestimmen eines Abstandes (D) zwischen einem Lasersystem (11; 51) und einer Projektionsfläche (14; 54), mit den Schritten:
▪ Anordnen eines Retroreflektors (13; 53) mit einem Reflexionsvermögen (R) auf der Projektionsfläche (14; 54), wobei ein Laserstrahl des Lasersystems (11; 51) vom Retroreflektor (13; 53) überwiegend reflektiert wird,
▪ Aussenden eines Laserstrahls (31; 74) mit einer Strahlleistung (P) auf den Retroreflektor (13; 53),
▪ Bestimmen einer Intensität (I_{D}) eines am Retroreflektor (13; 53) reflektierten Laserstrahls (39; 84) mittels eines Detektors (12; 52),
▪ Vergleichen der Intensität (I_{D}) des reflektierten Laserstrahls (39; 84) mit gespeicherten Werten und
▪ Bestimmen des Abstandes (D), der der Intensität (I_{D}) zugeordnet ist.

2. Verfahren nach Anspruch 1, **dadurch gekennzeichnet, dass** in einer Kontrolleinrichtung (41; 65) des Lasersystems (11; 51) oder in einem mit der Kontrolleinrichtung (41) verbundenen Speicherelement (42) Werte von Intensitäten und Abständen, die einander zugeordnet sind, gespeichert werden.

3. Verfahren zum Anpassen der Brennweite einer Fokussieroptik (16; 56) eines Lasersystems (11; 51) abhängig von einem Abstand (D) zwischen dem Lasersystem (11; 51) und einer Projektionsfläche (14; 54), wobei der Abstand (D) mittels des Verfahrens nach einem der Ansprüche 1 bis 2 bestimmt wurde.

4. Vorrichtung (10; 50) zur Ausführung eines Verfahrens zum Bestimmen eines Abstandes (D) zwischen einem Lasersystem (11; 51) und einer Projektionsfläche (14; 54) nach einem der Ansprüche 1 bis 2, aufweisend das Lasersystem (11; 51), einen Detektor (12; 52) und einen Retroreflektor (13; 53).

5. Vorrichtung nach Anspruch 4, **dadurch gekennzeichnet, dass** der Retroreflektor (13; 53) ein Reflexionsvermögen (R) aufweist und ausgebildet ist, einen Laserstrahl des Lasersystems (11; 51) überwiegend zu reflektieren.

6. Vorrichtung nach Anspruch 4, **dadurch gekennzeichnet, dass** der Detektor (12; 52) ausgebildet ist, eine Intensität (I_{D}) eines am Retroreflektor (13; 53) reflektierten Laserstrahls (39; 84) zu bestimmen.

7. Vorrichtung nach Anspruch 6, **dadurch gekennzeichnet, dass** das Lasersystem (11) eine Strahlteilungsoptik (25) aufweist, die ausgebildet ist, den am Retroreflektor (13) reflektierten Laserstrahl (39) auf den Detektor (12) umzulenken.

8. Vorrichtung nach Anspruch 6, **dadurch gekennzeichnet, dass** der Detektor (52) und die Laserstrahlquelle (55) in eine Laserdiode (85) integriert sind.
